# EUROPÄISCHE PATENTSCHRIFT

(11) **EP 2 938 954 B1**
(45) Veröffentlichungstag und Bekanntmachung des Hinweises auf die Patenterteilung: **14.09.2016**
(21) Anmeldenummer: 13821488.7
(22) Anmeldetag: 23.12.2013
(51) Int. Cl.: C21C 5/40, F27D 19/00, C21B 7/00, F23L 17/00, F23N 3/08

(54) **ABGASANLAGE MIT REGELEINRICHTUNG UND VERFAHREN ZU DEREN BETRIEB**
EXHAUST GAS REGULATION SYSTEM AND PROCESS THEREOF
SYSTEME DE GAZ D'ÉCHAPPEMENT RÉGULÉ ET PROCÉDÉ DE CELUI-CI

(30) Priorität: 28.12.2012 DE 102012224510
(43) Veröffentlichungstag der Anmeldung: 04.11.2015
(73) Patentinhaber: SMS group GmbH, 40237 Düsseldorf (DE)
(72) Erfinder: THOMASBERGER, Jörg, 40470 Düsseldorf (DE)
(74) Vertreter: Klüppel, Walter
(86) Internationale Anmeldenummer: PCT/EP2013/077962
(87) Internationale Veröffentlichungsnummer: WO 2014/102263

(56) Entgegenhaltungen:
- WO-A1-2009/086981
- GB-A- 2 150 155
- US-A- 4 067 557
- US-A1- 2007 209 653

## Beschreibung

Die vorliegende Erfindung betrifft eine Abgasanlage mit einem Abgaskanal zum Aufnehmen von Abgas von einem Abgaserzeuger an seinem Eingang und zum Abgeben des Abgases an seinem Ausgang, mit einem Ventil in dem Abgaskanal, mit einem stromabwärts zu dem Ventil in dem Abgaskanal angeordneten Sauggebläse zum Fördern des Abgases innerhalb des Abgaskanals in Richtung Ausgang und mit einer Regelungseinrichtung. Die Erfindung betrifft auch ein Verfahren zum Betreib der Abgasanlage. Die vorliegende Erfindung findet vorzugsweise Anwendung bei einer Primärgas-Entstaubungsanlage für Konvertergas; sie ist jedoch nicht auf diese Anwendung beschränkt.

Es wird auf den folgenden Stand der Technik hingewiesen, der in Stahlwerken zur Behandlung von Primärgas aus Konvertern derzeit üblich ist. Demnach wird das Primärgas, welches bei Betrieb des Konverters aus dessen Mund austritt, zunächst in einem Kühlkanal gekühlt und nachfolgend in einem Abgaswäscher mit Wasser bestäubt. Dem Abgaswäscher ist stromabwärts ein Absauggebläse nachgeschaltet zum Fördern des Primärgases entweder in einen Kamin oder in eine Gasrückgewinnungsanlage. In dem Abgaswäscher ist ein Ventil mit der Funktion einer Venturi-Kehle eingebaut; dort wird das Wasser in den Strom des Primärgases eingestäubt. Während seines Betriebes wird der Konverter typischerweise in verschiedenen Betriebszuständen gefahren; während dieser unterschiedlichen Betriebszustände können die Druckverhältnisse des Primärgases im Abgaskanal jeweils variieren. Um in all diesen verschiedenen Betriebszuständen und bei allen Druckverhältnissen jeweils eine ausreichende Saugleistung für das Primärgas im Abgaskanal zu haben, wird das Sauggebläse traditionell während des gesamten Blasbetriebs mit nahezu auf seiner maximalen Leistung, d. h. mit maximaler Drehzahl betrieben. Parallel dazu ist es üblich, den Öffnungsgrad des Ventils, d. h. der Venturi-Kehle, derart zu regeln, dass eine Regelabweichung zwischen einem Soll-Unterdruck und einem Ist-Unterdruck des Primärgases am Konvertermund oder im Kamin auf einen gewünschten Soll-Unterdruck eingeregelt wird.

Der Dauerbetrieb des Gebläses auf konstant hoher Drehzahl hat den Nachteil, dass der Energieverbrauch des Gebläses und damit der Kostenaufwand für den Betrieb des Gebläses sehr hoch sind.

Im Stand der Technik sind bereits zahlreiche Abgasanlagen und Verfahren zu deren Betrieb wie in WO2009/086981, US2007/209653, US4067557 oder GB2016124 dargestellt, bei denen das Gebläse im Abgaskanal drehzahlgeregelt ist.

So offenbaren die Druckschriften DE 1 289 251, JP 11037455 A, JP 56137015 A, JP 11083006 A oder die JP 2008180394 A jeweils eine spezielle Regelung für ein Gebläse in einem Abgaskanal für verschiedenste Arten von Abgaserzeugern, z. B. für Vorwärmsysteme bei einem Zementdrehofen, für einen Heizofen, für einen Lichtbogenofen oder für einen Verbrennungsofen.

Darüber hinaus offenbart die deutsche Offenlegungsschrift DE 3301668 A1 ein Regelverfahren für eine Sekundärentstaubungsanlage, wobei das Absauggebläse im Abgaskanal in seiner Drehzahl derart geregelt wird, dass der Druckverlust der Gesamtanlage auf einen vorgegebenen Sollwert für den Druckverlust der Gesamtanlage eingeregelt wird.

Schließlich ist auf der Homepage des Ingenieurbüros Peter Voss-Spilker Service erwähnt, dass die Europäische Union im Juni 2010 strengere Wirkungsgradgrenzwerte für Ventilatoren bei metallurgischen Anlagen festgelegt hat; siehe im Internet unter www.pvsservice.de.

Der Erfindung liegt die Aufgabe zugrunde, für eine Abgasanlage und für ein Verfahren zu deren Betrieb eine alternative Regelung zur Regelung der Drehzahl des Sauggebläses im Abgaskanal der Abgasanlage vorzusehen, um Energie und Kosten einzusparen.

Diese Aufgabe wird im Hinblick auf die Abgasanlage durch den Gegenstand des Anspruchs 1 gelöst. Demnach ist die Abgasanlage dadurch gekennzeichnet, dass die Regelungseinrichtung ausgebildet ist, den Öffnungsgrad des Ventils auf einen vorgegebenen Soll-Öffnungsgrad einzuregeln durch geeignete Variation der Drehzahl des Sauggebläses.

Das Ventil mit geregelter Öffnungsstellung im Abgaswäscherabschnitt des Abgaskanals bildet eine geregelte Venturi-Kehle zum Einstäuben von Wasser in das Primärgas im Abgaswäscherabschnitt des Abgaskanals.

Der für das Ventil vorgegebene Soll-Öffnungsgrad wird empirisch bzw. auf Basis von Erfahrungswerten ermittelt und vorgegeben. Die beanspruchte Regelung bewirkt vorteilhafterweise, dass das Sauggebläse 130 nicht permanent bei maximaler Leistung bzw. bei maximaler Drehzahl betrieben werden muss, sondern dass dessen Drehzahl bedarfsabhängig gesenkt und damit auch der Bedarf an elektrischer Energie sowie die Kosten für den Betrieb des Gebläses deutlich reduziert werden können.

Ein erstes Ausführungsbeispiel für die beanspruchte Regelungseinrichtung ist in Anspruch 2 beschrieben. Dieses erste Ausführungsbeispiel zeichnet sich dadurch aus, dass die Drehzahl für das Sauggebläse nach Maßgabe einer ersten Regeldifferenz zwischen dem vorgegebenen Soll-Öffnungsgrad und einem gemessenen Ist-Öffnungsgrad des Ventils variiert wird. Ziel ist es dabei, die erste Regeldifferenz möglichst zu Null zu machen und auf diese Weise den Öffnungsgrad des Ventils auf dem vorgegebenen Soll-Öffnungsgrad zu halten. Anspruch 3 beschreibt eine dazu alternative Ausgestaltung der Regelungseinrichtung, wonach vorgesehen ist, dass die Drehzahl für das Sauggebläse nach Maßgabe einer zweiten Regelabweichung zwischen einem vorgegebenen Soll-Druckabfall und einem tatsächlich gemessenen Ist-Druckabfall über dem Ventil variiert wird. Ziel ist es dabei, die zweite Regeldifferenz möglichst zu Null zu machen und auf diese Weise den Druckabfall über dem Ventil auf den vorgegebenen Soll-Druckabfall einzuregeln.

Die Entscheidung, ob die Drehzahl für das Sauggebläse nach Maßgabe der ersten oder der zweiten Regelabweichung variiert wird, hängt grundsätzlich davon ab, welche Alternative die größere Drehzahl für das Sauggebläse bereitstellt. Zu diesem Zweck weist die erfindungsgemäße Regelungseinrichtung eine Maximalwert-Auswahlstufe auf, welche jeweils dasjenige Stellsignal auf einen Drehzahlgeber als Stellglied für das Sauggebläse durchschaltet, welches die größere Drehzahl für das Sauggebläse repräsentiert.

Vorteilhafterweise und besonders bevorzugt wird die Erfindung in einer Abgasanlage in einem Stahlwerk mit Konverter betrieben. Bei dem Abgaserzeuger handelt es sich dann um einen Konverter, dessen Konvertermund an den Eingang des Abgaskanals angeschlossen ist. Bei dem Abgas handelt es sich dann um Primärgas, welches bei Betrieb des Konverters aus dessen Konvertermund austritt. Der Abgaskanal weist dann einen Kühlkanalabschnitt auf zum Kühlen des Primärgases, wobei sich der Kühlkanalabschnitt unmittelbar an den Konvertermund anschließt. Zwischen dem Ausgang des Kühlkanalabschnitts und dem Sauggebläse ist ein Abgaswäscherabschnitt im Abgaskanal vorgesehen. In dem Abgaswäscherabschnitt ist das Ventil angeordnet, dessen Öffnungsstellung mit der erfindungsgemäßen Regelungseinrichtung auf eine Soll-Öffnungsstellung eingeregelt wird. Stromabwärts des Absauggebläses wird das Primärgas entweder an einen Kamin oder an eine Gasrückgewinnungsanlage abgegeben.

Die erfindungsgemäßen Regelungen erfolgen grundsätzlich nur, wenn der Konverter im Blasbetrieb betrieben wird, d. h. wenn Sauerstoff in den Konverter eingeblasen wird.

Die gemäß dem oben beschriebenen zweiten Ausführungsbeispiel beschriebene alternative Bereitstellung eines Stellsignals für den Drehzahlgeber für das Absauggebläse nach Maßgabe der zweiten Regeldifferenz ist überhaupt nur dann vorgesehen, wenn das Abgas am Ausgang des Abgaskanals an die Gasrückgewinnungsanlage abgegeben wird. In allen anderen Fällen, insbesondere wenn das Primärgas an den Kamin abgegeben wird, wird das zweite Steuersignal S2 nicht für die Maximalwert-Auswahlstufe bereitgestellt; diese schaltet dann automatisch das erste Stellsignal auf den Drehzahlgeber 144 durch.

Die oben erwähnte Aufgabe der Erfindung wird weiterhin durch ein beanspruchtes Verfahren zum Betreiben der zuvor beschriebenen Abgasanlage gelöst. Das gilt insbesondere für den Betrieb der Abgasanlage in einem Stahlwerk mit Konverterbetrieb, wie ebenfalls oben beschrieben.

Ergänzend bzw. parallel zu dem bisher beschriebenen Betrieb der Regelungseinrichtung gemäß dem ersten oder zweiten Verfahren kann im Sinne einer Kaskadenregelung vorgesehen sein, dass zusätzlich die Öffnungsstellung des Ventils im Abgaswäscherabschnitt nach Maßgabe einer dritten Regelabweichung variabel eingestellt werden kann, um den Unterdruck des Abgases am Konvertermund oder im Kamin auf einen vorgegebenen Soll-Unterdruck einzuregeln. Die dritte Regelabweichung repräsentiert dann die Differenz zwischen dem vorgegebenen Soll-Unterdruck und einem erfassten Ist-Unterdruck des Abgases am Konvertermund oder im Kamin.

Der Beschreibung sind zwei Figuren beigefügt, wobei
- Figur 1: eine Abgasanlage mit einer erfindungsgemäßen Regelungseinrichtung zur Regelung der Drehzahl eines Absauggebläses im Abgaskanal;
und
- Figur 2: ein Blockschaltbild zur Erläuterung der Funktionsweise der erfindungsgemäßen Regelungseinrichtung
zeigt.

Die Erfindung wird nachfolgend unter Bezugnahme auf die genannten Figuren in Form von Ausführungsbespielen detailliert beschrieben.

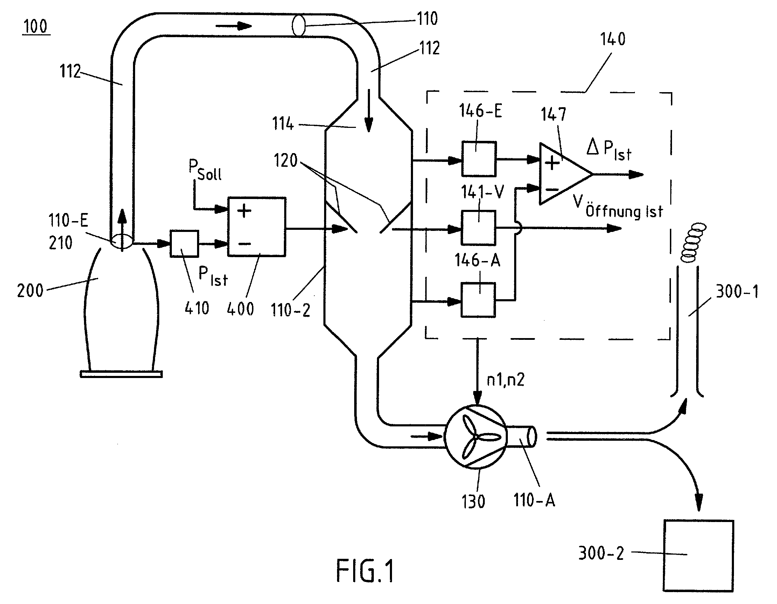

Figur 1 zeigt eine Abgasanlage 100, insbesondere eine Primärgas-Entstaubungsanlage für Konvertgas. Bei Betrieb entweicht aus einem Abgaserzeuger 200 in Form eines Konverters an dessen Konvertermund 210 heißes Primärgas. Dieses Primärgas wird über einen Abgaskanal 110 entweder an einen Kamin 300-1 oder an eine Gasrückgewinnungsanlage 300-2 abgegeben. An seinem Eingang 110-E ist der Abgaskanal 110 an den Konvertermund 210 angeschlossen. Genauer gesagt ist zunächst ein Kühlkanalabschnitt 112 des Abgaskanals 110 dem Konverter direkt nachgeschaltet. In Strömungsrichtung schließt sich an den Kühlkanalabschnitt 112 ein Abgaswäscherabschnitt 114 an. Zwischen den Ausgang 110-A des Abgaskanals 110 und den Ausgang des Abgaswäscherabschnittes 114 ist ein Sauggebläse 130 geschaltet. Das Abgas in Form des Primärgases durchströmt den Abgaskanal in Pfeilrichtung.

Innerhalb des Abgaswäscherabschnitts 114 ist ein Ventil 120 angeordnet, dessen Öffnungsstellung typischerweise mit Hilfe einer Regelungseinrichtung 400 nach Maßgabe einer dritten Regelabweichung derart variiert wird, dass der Unterdruck des Abgases am Konvertermund oder im Kamin auf einen vorgegebenen Soll-Unterdruck geregelt wird. Die dritte Regelabweichung repräsentiert die Differenz zwischen dem vorgegeben Soll-Unterdruck und einem erfassten Ist-Unterdruck am Konvertermund 210 oder im Kamin. Um die Figur 1 nicht unnötig zu überfrachten, ist der Druckabgriff lediglich am Konvertermund nicht aber im Kamin gezeigt. Der vorgegebene Soll-Unterdruck ist mit dem Bezugszeichen P_{Soll} bezeichnet und der erfasste Ist-Unterdruck ist mit dem Bezugszeichen P_{Ist} bezeichnet. Er wird mit Hilfe eines Drucksensors 410 erfasst.

Erfindungsgemäß ist eine erste Regelungseinrichtung 140 vorgesehen, um den Öffnungsgrad des Ventils 120 auf einen vorgegebenen Soll-Öffnungsgrad einzuregeln durch geeignete Variation der Drehzahl n des Sauggebläses 130. Die erste Regelungseinrichtung 140 kann ohne oder parallel zu der dritten Regelungseinrichtung 400 betrieben werden.

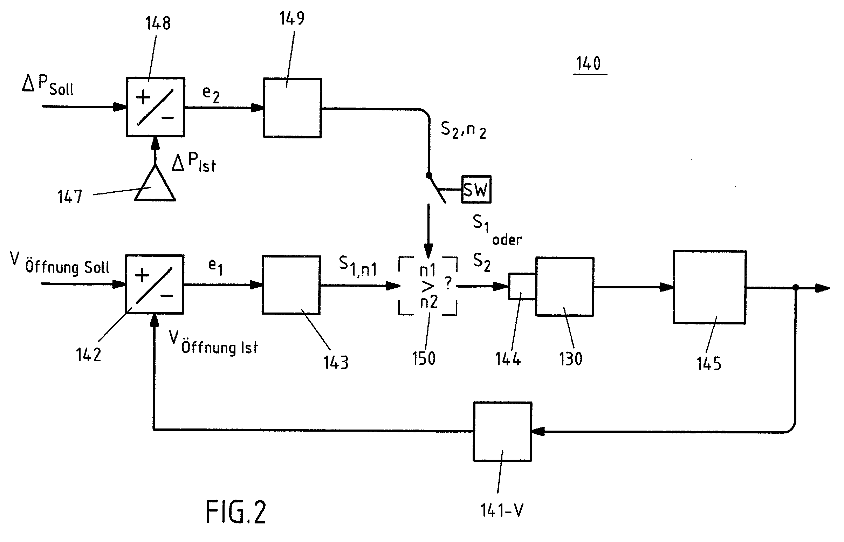

Der Aufbau und die Funktionsweise dieser ersten Regelungseinreichung 140 wird nachfolgend unter Bezugnahme auf Figur 2 näher erläutert.

In Figur 2 ist zunächst in der unteren Hälfte die Ausbildung der Regelungseinrichtung 140 gemäß einem ersten Ausführungsbeispiel gezeigt. Demnach ist ein erstes Messglied 141-V vorgesehen zum Erfassen des jeweils aktuellen Öffnungsgrades des Ventils 120. Der so ermittelte Ist-Öffnungsgrad V_{Öffnung Ist} wird in einem ersten Soll-/Ist-Wert-Vergleicher 142 mit einem vorgegebenen Soll-Öffnungsgrad V_{Öffnung Soll} verglichen zwecks Ermittlung einer ersten Regeldifferenz e1. Diese erste Regeldifferenz e1 wird als Signal einem ersten Regler 143 zugeführt, welcher nach Maßgabe der empfangenen ersten Regeldifferenz ein erstes Stellsignal S1 für ein Stellglied in Form eines Drehzahlgebers 144 für das Absauggebläse bereitstellt. Das erste Stellsignal S1 repräsentiert eine erste Drehzahl n1 für das Absauggebläse.

Die variabel eingestellte Drehzahl des Absauggebläses 130 hat unmittelbare Auswirkung auf die Regelstrecke 145, insbesondere gebildet durch den Konverter 200 und den Abgaskanal 110 mit dem Kühlkanalabschnitt 112 und dem Abgaswäscherabschnitt 114. Dementsprechend hat die jeweils aktuelle Drehzahl auch Auswirkung auf die tatsächliche Öffnungsstellung des Ventils 120, welche mit Hilfe des ersten Messgliedes 141-V erfasst wird.

Die am ersten Soll-/Ist-Wert-Vergleicher 142 vorgegebene Soll-Öffnungsstellung für das Ventil 120 wird für die bevorzugte Anwendung zur Primärgas-Entstaubung für Konvertergas zu 30 % ± 5 %, bezogen auf die maximale Offenstellung von 100 %, eingeregelt bzw. vorgegeben. Diese Öffnungsstellung von ± 30 % bietet die beiden folgenden Vorteile:
1. dann ist der Druckabfall, d. h. die Differenz zwischen Druck am Ausgang und Druck am Eingang des Ventils minimal; dies ist vorteilhaft für das Abbrennen des Primärgases nach Verlassen des Abgaskanals 110.
2. denn liegt der Arbeitspunkt des Ventils vorteilhafterweise in einem näherungsweise linearen Bereich der Kennlinie des Ventils.

Wenn das Abgas nicht an einen Kamin, sondern an eine Gasrückgewinnungsanlage geleitet wird, bietet sich das nachfolgend beschriebene zweite Ausführungsbeispiel für die erfindungsgemäße Regelungseinrichtung 140 bzw. für den Betrieb der Abgasanlage an.

Dieses zweite Ausführungsbeispiel sieht vor, dass der oben bereits erwähnte Druckabfall Δp_{Ist} über dem Ventil 120 erfasst und mit einem vorgegebenen Soll-Druckabfall Δp_{Soll} verglichen wird. Die durch Subtraktion dieser beiden Größen gebildete zweite Regelabweichung e₂ wird auf einen zweiten Regler 149 gegeben. Der Druckabfall Δp_{Ist} über dem Ventil 120 wird ermittelt, indem der Druck am Eingang des Ventils mit Hilfe eines Messglieds 146-E erfasst wird und mit dem von einem Messglied 146-A am Ausgang des Ventils erfassten Druck subtrahiert wird. Die Subtraktion erfolgt in einem Differenzbildner 147.

Der zweite Regler 149 stellt an seinem Ausgang ein zweites Regelsignal S2 bereit, welches eine Drehzahl n2 für das Sauggebläse 130 bzw. dessen Drehzahlgeber 144 repräsentiert. Gemäß dem zweiten Ausführungsbeispiel wählt dann eine Maximalwert-Auswahlstufe 150 entweder das erste Stellsignal S1 oder das zweite Stellsignal S2 zur Durchschaltung auf den Drehzahlgeber 144 aus. Die Maximalwert-Auswahlstufe 150 schaltet jeweils dasjenige Stellsignal S1, S2 auf den Drehzahlgeber 144 durch, welches die größere Drehzahl n1, n2 repräsentiert. Wenn das Abgas an die Gasrückgewinnungsanlage abgegeben wird, ist der Schalter SW geschlossen; wenn das Abgas an einen Kamin abgegeben wird, ist er geöffnet. Der Soll-Druckabfall Δp_{Soll} am Eingang des zweiten Vergleichers 148 wird derart vorgegeben, dass die Zerstäubung des in den Abgaswäscher bzw. dort in das Primärgas eingedüsten Wassers optimal ist.

### Bezugszeichenliste

- 100: Abgasanlage
- 110: Abgaskanal
- 110-E: Eingang des Abgaskanals
- 110-A: Ausgang des Abgaskanals
- 112: Kühlkanalabschnitt
- 120: Ventil
- 130: Sauggebläse
- 140: Regelungseinrichtung
- 141-V: Erstes Messglied
- 142: Erster Vergleicher
- 143: Erster Regler
- 144: Stellglied in Form eines Drehzahlreglers für das Absauggebläse
- 145: Regelstrecke
- 146-E: Zweites Messglied zum Erfassen des Drucks am Eingang des Ventils
- 146-A: Drittes Messglied zum Erfassen des Drucks am Ausgang des Ventils
- 147: Differenzbildner
- 148: Zweiter Vergleicher
- 149: Zweiter Regler
- 150: Maximalwert-Auswahlstufe
- 200: Abgaserzeuger, insbesondere Konverter
- 210: Konvertermund
- 300-1: Kamin
- 300-2: Gasrückgewinnungsanlage
- S1: Erstes Stellsignal
- S2: Zweites Stellsignal
- e1: Erste Regeldifferenz
- e2: Zweite Regeldifferenz
- V_{Öffnung Soll}: Vorgegebener Soll-Öffnungsgrad des Ventils
- V_{Öffnung Ist}: Erfasster bzw. gemessener Ist-Öffnungsgrad des Ventils
- Δp_{Soll}: Vorgegebener Soll-Druckabfall über dem Ventil
- Δp_{Ist}: Gemessener Ist-Druckabfall über dem Ventil
- n1: Erste Drehzahl für das Sauggebläse
- n2: Zweite Drehzahl für das Sauggebläse

## Patentansprüche

1. Abgasanlage (100) mit
einem Abgaskanal (110) zum Aufnehmen von Abgas von einem Abgaserzeuger (200) an seinem Eingang (110-E) und zum Abgeben des Abgases an seinem Ausgang (110-A),
einem Ventil (120) in dem Abgaskanal,
einem stromabwärts zu dem Ventil (120) in dem Abgaskanal (110) angeordneten Sauggebläse (130) zum Fördern des Abgases innerhalb des Abgaskanals in Richtung Ausgang (110-A), und
einer Regeleinrichtung (140),
**dadurch gekennzeichnet, dass**
die Regelungseinrichtung (140) aufweist,
ein erstes Messglied (141-V) zum Erfassen des jeweils aktuellen Ist-Öffnungsgrades des Ventils (120),
einen ersten Soll-/Ist-Wert-Vergleicher (142) zum Ermitteln einer ersten Regeldifferenz e1 als Differenz zwischen dem vorgegebenen Soll-Öffnungsgrad (V_{Öffnung Soll}) und dem gemessenen Ist-Öffnungsgrad (V_{Öffnung Ist}) des Ventils (120),
einen ersten Regler (143) zum Ausgeben eines ersten Stellsignals (S1) nach Maßgabe der empfangenen ersten Regeldifferenz e1 zwischen dem vorgegebenen Soll-Öffnungsgrad (V_{Öffnung Soll}) und einem gemessenen Ist-Öffnungsgrad (V_{Öffnung Ist}) des Ventils (120), wobei das ersten Stellsignal (S1) eine erste Drehzahl n1 für das Abgasgebläse (130) repräsentiert, und ein Stellglied (144) in Form eines Drehzahlgebers für das Absauggebläse (130) zum Einstellen und gegebenenfalls Variieren der Drehzahl im Ansprechen auf das empfangene erste Stellsignal (S1),
wodurch die Regeleinrichtung (140) ausgebildet ist, den Öffnungsgrad des Ventils (120) auf einen vorgegebenen Soll-Öffnungsgrad (V_{Öffnung Soll}) einzure-geln durch geeignete Variation der Drehzahl des Sauggebläses (130).

2. Abgasanlage (100) nach Anspruch 1,
**dadurch gekennzeichnet, dass**
die Regeleinrichtung (140) zusätzlich folgende Erweiterungen aufweist:
ein zweites und ein drittes Messglied (146-E, 146-A) sowie einen Vergleicher (147) zum Erfassen des Ist-Druckabfalls Δp_{Ist} über dem Ventil (120), einen zweiten Soll-/Ist-Wert-Vergleicher (148) zum Ermitteln einer zweiten Regeldifferenz e2 als Differenz zwischen einem vorgegebenen Soll-Druckabfall (Δp_{Soll}) und dem gemessenen Ist-Druckabfall (Δp_{Ist}) über dem Ventil (120),
einen zweiten Regler (149) zum Ausgeben eines zweiten Stellsignals (S2) nach Maßgabe der empfangenen zweiten Regelabweichung e2 zwischen dem vorgegebenen Soll-Druckabfall (Δp_{Soll}) und dem gemessenen Ist-Druckabfall (Δp_{Ist}) über dem Ventil (120),
wobei das zweite Stellsignal (S2) eine zweite Drehzahl (n2) für das Abgasgebläse (130) repräsentiert, und
eine Maximalwert-Auswahlstufe (150) zum Aufschalten des ersten Stellsignals (S1) auf den Drehzahlgeber (144), wenn die erste Drehzahl (n1) größer als die zweite Drehzahl (n2) oder zum Aufschalten des zweiten Stellsignals (S2) auf den Drehzahlgeber (144), wenn die zweite Drehzahl (n2) größer als die erste Drehzahl (n1) ist.

3. Abgasanlage (100) nach einem der vorangegangenen Ansprüche,
**dadurch gekennzeichnet, dass**
es sich bei dem Abgaserzeuger (200) um einen Konverter in einem Stahlwerk handelt, dessen Konvertermund (210) an den Eingang (110-E) des Abgaskanals (110) angeschlossen ist,
dass es sich bei dem Abgas um das Primärgas handelt, welches bei Betrieb I des Konverters aus dessen Kovertermund austritt,
dass der Abgaskanal (110) einen Kühlkanalabschnitt (112) aufweist, der sich an den Konvertermund (210) anschließt, und einen Abgaswäscherabschnitt (114) aufweist, welcher stromabwärts dem Kühlkanal nachgeschaltet und dem Sauggebläse (130) vorgeschaltet ist, wobei das Ventil (120) in dem Abgaswäscherabschnitt (114) angeordnet ist, und dass das Abgas am Ausgang (110-A) des Abgaskanals entweder an einen Kamin (300-1) oder an eine Gasrückgewinnungsanlage (300-2) abgegeben wird.

4. Abgasanlage (100) nach einem der Ansprüche 2 und 3,
**dadurch gekennzeichnet, dass**
die Erweiterung der Regelungseinrichtung (140) nach Anspruch 3 lediglich dann vorgesehen ist, wenn das Abgas am Ausgang (110-A) des Abgaskanals an die Gasrückgewinnungsanlage (300-2) abgegeben wird.

5. Verfahren zum Betreiben einer Abgasanlage (100), wobei die Abgasanlage aufweist einen Abgaskanal (110) zum Aufnehmen von Abgas von einem Abgaserzeuger (200) an seinem Eingang (110-E) und zum Abgeben des Abgases an seinem Ausgang (110-A), ein Ventil (120) in dem Abgaskanal (110, 114), ein stromabwärts zu dem Ventil (120) in dem Abgaskanal angeordnetes Sauggebläse (130) zum Fördern des Abgases innerhalb des Abgaskanals in Richtung Ausgang, und eine Regeleinrichtung (140),
**gekennzeichnet durch** folgende Schritte:
Regeln des Öffnungsgrades des Ventils (120) auf einen vorgegebenen Soll-Öffnungsgrad (V_{Öffnung Soll}) **durch** geeignete Variation der Drehzahl des Sauggebläses (130).

6. Verfahren nach Anspruch 5,
**gekennzeichnet durch** die folgenden Schritte:
Erfassen des jeweils aktuellen Ist-Öffnungsgrades des Ventils (V_{Öffnung Ist}), Ermitteln einer ersten Regeldifferenz e1 als Differenz zwischen dem vorgegebenen Soll-Öffnungsgrad und dem gemessenen Ist-Öffnungsgrad des Ventils,
Erzeugen eines ersten Stellsignals (S1) nach Maßgabe der ersten Regeldifferenz e1 zwischen dem vorgegebenen Soll-Öffnungsgrad und einem gemessenen Ist-Öffnungsgrad des Ventils (120), wobei das erste Stellsignal (S1) eine erste Drehzahl (n1) für das Abgasgebläse repräsentiert, und
Einstellen und gegebenenfalls Variieren der ersten Drehzahl (n1) im Ansprechen auf das empfangene erste Stellsignal (S1).

7. Verfahren nach Anspruch 6,
weiterhin **gekennzeichnet durch** folgende Schritte:
Erfassen des Ist-Druckabfalls Δp über dem Ventil (120),
Ermitteln einer zweiten Regeldifferenz e2 als Differenz zwischen einem vorgegebenen Soll-Druckabfall (Δp_{Soll}) und dem gemessenen Ist-Druckabfall (Δp_{Ist}) über dem Ventil (120),
Erzeugen eines zweiten Stellsignals (S2) nach Maßgabe der zweiten Regelabweichung e2 zwischen dem vorgegebenen Soll-Druckabfall (Δp_{Soll}) und dem gemessenen Ist-Druckabfall (Δp_{Ist}) über dem Ventil (120), wobei das zweite Stellsignal (S2) eine zweite Drehzahl (n2) für das Abgasgebläse repräsentiert, und
Aufschalten des ersten Stellsignals (S1) auf den Drehzahlgeber (144), wenn die erste Drehzahl (n1) größer als die zweite Drehzahl (n2) oder zum Aufschalten des zweiten Stellsignals (S2) auf den Drehzahlgeber, wenn die erste Drehzahl (n1) kleiner als die zweite Drehzahl (n2) ist.

8. Verfahren nach Anspruch 7,
**dadurch gekennzeichnet, dass**
die Ermittlung der zweiten Regeldifferenz (e2) und die Bereitstellung des zweiten Stellsignals (S2) zur Auswahl neben dem ersten Stellsignal (S1) nur dann erfolgt, wenn das Abgas am Ausgang des Abgaskanals an eine Gasrückgewinnungsanlage (300-2) abgegeben wird.

9. Verfahren nach einem der Ansprüche 5 bis 8,
**dadurch gekennzeichnet, dass**
es sich bei dem Abgaserzeuger (200) um einen Konverter in einem Stahlwerk handelt, dessen Konvertermund (210) an den Eingang (110-E) des Abgaskanals (110) angeschlossen ist,
dass es sich bei dem Abgas um das Primärgas handelt, welches bei Betrieb des Konverters aus dessen Kovertermund austritt,
dass der Abgaskanal (110) einen Kühlkanalabschnitt (112) aufweist, der sich an den Konvertermund (210) anschließt, und einen Abgaswäscherabschnitt (114) aufweist, welcher stromabwärts dem Kühlkanal nachgeschaltet und dem Sauggebläse (130) vorgeschaltet ist, wobei ein Ventil (120) in dem Abgaswäscherabschnitt (114) angeordnet ist, und dort als geregelte Venturi-Kehle betrieben wird zum Einstäuben von Wasser in das Abgas in dem Abgaswäscherabschnitt (114) des Abgaskanals (110) und dass das Abgas am Ausgang (110-A) des Abgaskanals entweder an einen Kamin (300-1) oder an eine Gasrückgewinnungsanlage (300-2) abgegeben wird.

10. Verfahren nach Anspruch 9,
**dadurch gekennzeichnet, dass**
die Variation der Öffnungsstellung des Ventils (120) nach Maßgabe einer dritten Regelabweichung erfolgt, welche die Differenz zwischen einem vorgegebenen Soll-Unterdruck und einem erfassten Ist-Unterdruck am Konvertermund (210) oder im Kamin repräsentiert und wobei durch die Variation der Öffnungsstellung des Ventils angestrebt wird, dass die dritte Regelabweichung möglichst zu Null wird.

11. Verfahren nach einem der Ansprüche 5 bis 10,
**dadurch gekennzeichnet, dass**
sämtliche Verfahrensschritte nur erfolgen, während der Abgaserzeuger (200) in Form des Konverters im Blasbetrieb betrieben wird.

## Claims

1. Waste gas plant (100) with
a waste gas channel (110) for receiving waste gas, which is from a waste gas generator (200), at its inlet (110-E) and for delivering the waste gas at its outlet (110-A) a valve (120) in the waste gas channel,
a suction fan (130), which is arranged in the waste gas channel (110) downstream of the valve (120), for conveying the waste gas within the waste gas channel in the direction of the outlet (110-A) and
a regulating device (140),
**characterised in that**
the regulating device (140) comprises
a first measuring element (141-V) for detecting the respective current actual degree of opening of the valve (120),
a first target/actual value comparator (142) for determining a first regulating difference e1 as the difference between the predetermined target degree of opening (V_{Öffnung Soll}) and the measured actual degree of opening (V_{Öffnung Ist}) of the valve (120),
a first regulator (143) for output of a first setting signal (S1) depending on the received first regulating difference e1 between the predetermined target degree of opening (V_{Öffnung Soll}) and a measured actual degree of opening (V_{Öffnung Ist}) of the valve (120), wherein the first setting signal (S1) represents a first rotational speed n1 for the waste gas fan (130), and
a setting element (144) in the form of a rotational speed transmitter for the suction fan (130) for setting and optionally varying the rotational speed in response to the received first setting signal (S1),
whereby the regulating device (140) is constructed to regulate the degree of opening of the valve (120) to the predetermined target degree of opening ((V_{Öffnung Soll}) by suitable variation of the rotational speed of the suction fan (130).

2. Waste gas plant (100) according to claim 1, **characterised in that** the regulating device (140) additionally comprises the following enhancements:
a second and a third measuring element (146-E, 146-A) as well as a comparator (147) for detecting the actual pressure drop Δp_{Ist} across the valve (120),
a second target/actual value comparator (148) for determining a second regulating difference e2 as the difference between a predetermined target pressure drop (Δp_{Soll}) and the measured actual pressure drop (Δp_{Ist}) across the valve (120),
a second regulator (149) for output of a second setting signal (S2) depending on the received second regulating difference e2 between the predetermined target pressure drop (Δp_{Soll}) and the measured actual pressure drop (Δp_{Ist}) across the valve (120),
wherein the second setting signal (S2) represents a second rotational speed (n2) for the waste gas fan (130), and
a maximum value selection stage (150) for applying the first setting signal (S1) to the rotational speed transmitter (144) when the first rotational speed (n1) is greater than the second rotational speed (n2) or for applying the second setting signal (S2) to the rotational speed transmitter (144) when the second rotational speed (n2) is greater than the first rotational speed (n1).

3. Waste gas plant (100) according to one of the preceding claims, **characterised in that**
the waste gas generator (200) is a converter in a steel works, the converter mouth (210) of which is connected with the inlet (110-E) of the waste gas channel (110),
the waste gas is the primary gas which during operation of the converter issues from the converter mouth thereof,
the waste gas channel (110) has a cooling channel section (112), which is connected with the converter mouth (210), and a waste gas washer section (114), which is connected downstream of the cooling channel and upstream of the suction fan (130), wherein the valve (120) is arranged in the waste gas washer section (114), and
the waste gas is delivered at the outlet (110-A) of the waste gas channel either to a flue (300-1) or to a gas recover plant (300-2).

4. Waste gas plant (100) according to one of claims 2 and 3, **characterised in that** the enhancement of the regulating device (140) according to claim 3 is provided merely when the waste gas at the outlet (110-A) of the waste gas channel is delivered to the gas recovery plant (300-2).

5. Method of operating a waste gas plant (100), Wherein the waste gas plant has a waste gas channel (110) for receiving waste gas, which is from a waste gas generator (200), at its inlet (110-E) and for delivering the waste gas at its outlet (110-A), a valve (120) in the waste gas channel (110, 114), a suction fan (130), which is arranged in the waste gas channel downstream of the valve (120), for conveying the waste gas within the waste gas channel in the direction of the outlet, and a regulating device (140), **characterised by** the following steps:
regulating the degree of opening of the valve (120) to a predetermined target degree of opening (V_{Öffnung Soll}) by suitable variation of the rotational speed of the suction fan (130).

6. Method according to claim 5, **characterised by** the following steps:
detecting the respective actual degree of opening of the valve (V_{Öffnung Soll}), determining a first regulating difference e1 as the difference between the predetermined target degree of opening and the measured actual degree of opening of the valve,
generating a first setting signal (S1) depending on the first regulating difference e1 between the predetermined target degree of opening and a measured actual degree of opening of the valve (120), wherein the first setting signal (S1) represents a first rotational speed (n1) for the waste gas fan, and
setting and optionally varying the first rotational speed (n1) in response to the received first setting signal (S1).

7. Method according to claim 6, further **characterised by** the following steps:
detecting the actual pressure drop Δp across the valve (120),
determining a second regulating difference e2 as the difference between a predetermined target pressure drop (Δp_{Soll}) and the measured actual pressure drop (Δp_{Ist}) across the valve (120),
generating a second setting signal (S2) depending on the second regulating difference e2 between the predetermined target pressure drop (Δp_{Soll}) and the measured actual pressure drop (Δp_{Ist}) across the valve (120), wherein the second setting signal (S2) represents a second rotational speed (n2) for the waste gas fan, and
applying the first setting signal (S1) to the rotational speed transmitter (144) when the first rotational speed (n1) is higher than the second rotational speed (n2) or applying the second setting signal (S2) to the rotational speed transmitter when the first rotational speed (n1) is lower than the second rotational speed (n2).

8. Method according to claim 7, **characterised in** the
the determination of the second regulating difference (e2) and the provision of the second setting signal (S2) for the selection apart from the first setting signal (S1) is carried out only when the waste gas at the outlet of the waste gas channel is delivered to a gas recovery plant (300-2).

9. Method according to any one of claims 5 to 8, **characterised in that**
the waste gas generator (200) is a converter in a steel works, the converter mouth (210) of which is connected with the inlet (110-E) of the waste gas channel (110),
the waste gas is the primary gas which during operation of the converter issues from the converter mouth thereof,
the waste gas channel (110) has a cooling channel section (112), which is connected with the converter mouth (210), and a waste gas washer section (114), which is connected downstream of the cooling channel and upstream of the suction fan (130), wherein a valve (120) is arranged in the waste gas washer section (114) and is operated there as a regulated venturi throat for the scattering of water into the waste gas in the waste gas washer section (114) of the waste gas channel (110), and
the waste gas is delivered at the outlet (110-A) of the waste gas channel either to a flue (300-1) or to a gas recovery plant (300-2).

10. Method according to claim 9, **characterised in that**
the variation of the setting of the opening of the valve (120) is carried out depending on a third regulating difference representing the difference between a predetermined target sub-atmospheric pressure and a detected actual sub-atmospheric pressure at the converter mouth (210) or in the flue and wherein it is sought by the variation of the setting of the opening of the valve for the third regulating difference to be, as far as possible, zero.

11. Method according to any one of claims 5 to 10, **characterised in that** all method steps are carried out only whilst the waste gas generator (200) in the form of the converter is in blowing operation.

## Revendications

1. Installation d'évacuation de gaz d'échappement (100) comprenant :
un canal d'évacuation de gaz d'échappement (110) pour l'absorption des gaz d'échappement d'un producteur de gaz d'échappement (200) à son entrée (110-E) et pour l'évacuation des gaz d'échappement à sa sortie (110-A);
un clapet (120) dans le canal d'évacuation des gaz d'échappement ;
un ventilateur d'extraction (130) disposé dans le canal d'évacuation des gaz d'échappement (110) en aval du clapet (120) pour le transport des gaz d'échappement à l'intérieur du canal d'évacuation des gaz d'échappement en direction de la sortie (110-A); et
un mécanisme de réglage (140);
**caractérisée en ce que**
le mécanisme de réglage (140) présente :
un premier élément de mesure (141-V) pour l'enregistrement du degré d'ouverture réel du clapet (120) respectivement en vigueur ;
un premier comparateur de valeur de consigne/valeur réelle (142) pour la détermination d'une première différence de réglage (e1) à titre de différence entre le degré d'ouverture de consigne prédéfini (Vouverture de consigne) et le degré d'ouverture réel mesuré (V_{ouverture réelle}) du clapet (120) ;
un premier calculateur (143) pour l'émission d'un premier signal de réglage (S1) qui prend en compte la première différence de réglage reçue (e1) entre le degré d'ouverture de consigne prédéfini (Vouverture de consigne) et un degré d'ouverture réel mesuré (Vouverture réelle) du clapet (120), le premier signal de réglage (S1) représentant une première vitesse de rotation (n1) pour le ventilateur d'extraction (130), et
un élément de réglage (144) sous la forme d'un détecteur de la vitesse de rotation pour le ventilateur d'extraction (130) à des fins de réglage et le cas échéant de variation de la vitesse de rotation en réponse au premier signal de réglage reçu (S1); dans laquelle le mécanisme de réglage (140) est réalisé d'une manière telle que l'on établit le degré d'ouverture du clapet (120) à un degré d'ouverture de consigne prédéfini (V_{ouverture de} consigne) via une variation appropriée de la vitesse de rotation du ventilateur d'extraction (130).

2. Installation d'évacuation de gaz d'échappement (100) selon la revendication 1,
**caractérisée en ce que**
le mécanisme de réglage (140) comprend en outre les extensions suivantes :
un deuxième et un troisième élément de mesure (146-E, 146-A), ainsi qu'un comparateur (147) pour enregistrer la chute de pression réelle (Δp_{réelle}) à travers le clapet (120) ;
un deuxième comparateur de valeur de consigne/valeur réelle (148) pour la détermination d'une deuxième différence de réglage (e2) à titre de différence entre une chute de pression de consigne prédéfinie (Δp_{de} consigne) et la chute de pression réelle mesurée (Δp_{réelle}) à travers le clapet (120) ;
un deuxième calculateur (149) pour l'émission d'un deuxième signal de réglage (S2) qui prend en compte le deuxième écart de réglage reçu (e2) entre la chute de pression de consigne prédéfinie (Δp_{de} consigne) et la chute de pression réelle mesurée (Δp_{réelle}) à travers le clapet (120);
le deuxième signal de réglage (S2) représentant une deuxième vitesse de rotation (n2) pour le ventilateur d'extraction (130), et la sélection d'une valeur maximale (150) pour appliquer le premier signal de réglage (S1) au détecteur de la vitesse de rotation (144) lorsque la première vitesse de rotation (n1) est supérieure à la deuxième vitesse de rotation (n2) ou pour appliquer le deuxième signal de réglage (S2) au détecteur de la vitesse de rotation (144) lorsque la deuxième vitesse de rotation (n2) est supérieure à la première vitesse de rotation (n1).

3. Installation d'évacuation de gaz d'échappement (100) selon l'une quelconque des revendications précédentes, **caractérisée en ce que** :
en ce qui concerne le producteur de gaz d'échappement (200), il s'agit d'un convertisseur dans une aciérie, dont le bec (210) est raccordé à l'entrée (110-E) du canal d'évacuation des gaz d'échappement (110) ;
en ce qui concerne les gaz d'échappement, il s'agit des gaz primaires qui s'échappent du bec du convertisseur en état de marche du convertisseur ;
**en ce que** le canal d'évacuation des gaz d'échappement (110) présente un tronçon faisant office de canal de refroidissement (112) qui se raccorde au bec (210) du convertisseur, et présente un tronçon (114) pour le lavage des gaz d'échappement, qui est monté à la suite en aval par rapport au canal de refroidissement et qui est monté avant le ventilateur d'extraction (130), le clapet (120) étant disposé dans le tronçon (114) pour le lavage des gaz d'échappement ; et
**en ce que** les gaz d'échappement à la sortie (110-A) du canal d'évacuation des gaz d'échappement sont acheminés, soit à une cheminée (300-1), soit à une installation de récupération des gaz (300-2).

4. Installation d'évacuation de gaz d'échappement (100) selon l'une quelconque des revendications 2 et 3,
**caractérisée en ce que**
l'extension du mécanisme de réglage (140) selon la revendication 3 n'est prévue que lorsque les gaz d'échappement à la sortie (110-A) du canal d'évacuation des gaz d'échappement sont acheminés à l'installation de récupération des gaz (300-2).

5. Procédé pour la mise en service d'une installation d'évacuation de gaz d'échappement (100), l'installation d'évacuation des gaz d'échappement présentant un canal d'évacuation des gaz d'échappement (110) pour l'absorption des gaz d'échappement d'un producteur de gaz d'échappement (200) à son entrée (110-E) et pour l'évacuation des gaz d'échappement à sa sortie (110-A) ; un clapet (120) dans le canal d'évacuation des gaz d'échappement (110, 114); un ventilateur d'extraction (130) disposé dans le canal d'évacuation des gaz d'échappement (110) en aval du clapet (120) pour le transport des gaz d'échappement à l'intérieur du canal d'évacuation des gaz d'échappement en direction de la sortie ; et un mécanisme de réglage (140) ;
**caractérisé par** les étapes suivantes consistant à :
régler le degré d'ouverture du clapet (120) à un degré d'ouverture de consigne prédéfini (Vouverture de consigne) via une variation appropriée de la vitesse de rotation du ventilateur d'extraction (130).

6. Procédé selon la revendication 5, **caractérisé par** les étapes suivantes dans lesquelles :
on enregistre le degré d'ouverture réel respectif en vigueur (V_{ouverture réelle}) du clapet, on détermine une première différence de réglage e1 à titre de différence entre le degré d'ouverture de consigne prédéfini et le degré d'ouverture réel mesuré du clapet, on génère un premier signal de réglage (S1) qui prend en compte la première différence de réglage reçue (e1) entre le degré d'ouverture de consigne prédéfini et un degré d'ouverture réel mesuré du clapet (120), le premier signal de réglage (S1) représentant une première vitesse de rotation (n1) pour le ventilateur d'extraction, et on règle et le cas échéant on fait varier la première vitesse de rotation (n1) en réponse au premier signal de réglage reçu (S1).

7. Procédé selon la revendication 6,
**caractérisé en outre par** les étapes suivantes dans lesquelles :
on enregistre la chute de pression réelle (Δp) à travers le clapet (120) ;
on détermine une deuxième différence de réglage (e2) à titre de différence entre une chute de pression de consigne prédéfinie (Δp_{de consigne}) et la chute de pression réelle mesurée (Δp_{réelle}) à travers le clapet (120) ;
on génère un deuxième signal de réglage (S2) qui prend en compte le deuxième écart de réglage (e2) entre la chute de pression de consigne prédéfinie (Δp_{de} consigne) et la chute de pression réelle mesurée (Δp_{réelle}) à travers le clapet (120), le deuxième signal de réglage (S2) représentant une deuxième vitesse de rotation (n2) pour le ventilateur d'extraction, et
on applique le premier signal de réglage (S1) au détecteur de la vitesse de rotation (144) lorsque la première vitesse de rotation (n1) est supérieure à la deuxième vitesse de rotation (n2) ou on applique le deuxième signal de réglage (S2) au détecteur de la vitesse de rotation lorsque la première vitesse de rotation (n1) est inférieure à la deuxième vitesse de rotation (n2).

8. Procédé selon la revendication 7,
**caractérisé en ce que** :
la détermination de la deuxième différence de réglage (e2) et l'émission du deuxième signal de réglage (S2) à des fins de sélection à côté du premier signal de réglage (S1) n'a lieu que lorsque les gaz d'échappement à la sortie du canal d'évacuation des gaz d'échappement sont acheminés à une installation de récupération des gaz (300-2).

9. Procédé selon l'une quelconque des revendications 5 à 8, **caractérisé en ce que** :
en ce qui concerne le producteur de gaz d'échappement (200), il s'agit d'un convertisseur dans une aciérie, dont le bec (210) est raccordé à l'entrée (110-E) du canal d'évacuation des gaz d'échappement (110) ;
en ce qui concerne les gaz d'échappement, il s'agit des gaz primaires qui s'échappent, en état de marche du convertisseur, du bec de ce dernier ;
**en ce que** le canal d'évacuation des gaz d'échappement (110) présente un tronçon faisant office de canal de refroidissement (112) qui se raccorde au bec (210) du convertisseur, et présente un tronçon (114) pour le lavage des gaz d'échappement qui est monté à la suite en aval par rapport au canal de refroidissement et qui est monté avant le ventilateur d'extraction (130), un clapet (120) étant disposé dans le tronçon (114) pour le lavage des gaz d'échappement et y est activé pour faire office de goulot de Venturi réglé pour l'introduction d'eau par pulvérisation dans les gaz d'échappement dans le tronçon (114) du canal d'évacuation des gaz d'échappement (110), destiné au lavage des gaz d'échappement ; et **en ce que**
les gaz d'échappement à la sortie (110-A) du canal d'évacuation des gaz d'échappement sont acheminés, soit à une cheminée (300-1), soit à une installation de récupération des gaz (300-2).

10. Procédé selon la revendication 9,
**caractérisé en ce que** :
la variation du réglage de l'ouverture du clapet (120) a lieu en prenant en compte un troisième écart de réglage qui représente la différence entre une pression négative de consigne prédéfinie et une pression négative réelle enregistrée dans le bec (210) du convertisseur ou dans la cheminée, et, via la variation du réglage de l'ouverture du clapet, on tente de faire en sorte pour autant que possible que le troisième écart de réglage soit égal à zéro.

11. Procédé selon l'une quelconque des revendications 5 à 10, **caractérisé en ce que** :
toutes les étapes opératoires ne sont mises en oeuvre que lorsque le producteur de gaz d'échappement (200) sous la forme d'un convertisseur est mis en service dans le mode de fonctionnement par soufflage.
